(19) Europäisches Patentamt

European Patent Office

Office européen des brevets

(11) **EP 4 340 425 A1**

(12) # EUROPEAN PATENT APPLICATION
published in accordance with Art. 153(4) EPC

(43) Date of publication:
**20.03.2024 Bulletin 2024/12**

(21) Application number: **21941821.7**

(22) Date of filing: **10.05.2021**

(51) International Patent Classification (IPC):
**H04W 16/14** (2009.01)       **H04W 72/12** (2023.01)
**H04W 72/14** (2009.01)

(52) Cooperative Patent Classification (CPC):
**H04W 16/14; H04W 72/12; H04W 72/23;**
Y02D 30/70

(86) International application number:
**PCT/JP2021/017775**

(87) International publication number:
**WO 2022/239087 (17.11.2022 Gazette 2022/46)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **NTT DOCOMO, INC.**
**Chiyoda-ku**
**Tokyo 100-6150 (JP)**

(72) Inventors:
• **KUMAGAI, Shinya**
  **Tokyo 100-6150 (JP)**
• **NAGATA, Satoshi**
  **Tokyo 100-6150 (JP)**

(74) Representative: **Hoffmann Eitle**
**Patent- und Rechtsanwälte PartmbB**
**Arabellastraße 30**
**81925 München (DE)**

(54) **TERMINAL AND COMMUNICATION METHOD**

(57)     A control unit configured to determine whether COT (Channel occupancy time) sharing information is to be included in CG-UCI (Configured grant - Uplink control information) independently from information other than the COT sharing information; and a transmission unit configured to transmit the CG-UCI to a base station via a shared channel according to CG are included.

FIG.3

```
START
   │
   ▼
OBTAIN COT BY LBT                                    S11
   │
   ▼
TRANSMIT EACH OF COT SHARING INFORMATION AND        S12
REMAINING INFORMATION USING DIFFERENT
UPPER LAYER PARAMETER
   │
   ▼
END
```

EP 4 340 425 A1

**Description**

[FIELD OF THE INVENTION]

The present invention relates to a terminal and a communication method in a wireless communication system.

[BACKGROUND OF THE INVENTION]

In 3GPP (3rd Generation Partnership Project), in order to realize further larger system capacity, further faster data transmission speed, further lower latency in a wireless communication section, etc., a wireless communication method called "5G" or "NR (New Radio)" has been discussed (hereinafter, the wireless communication method is referred to as "NR"). Various radio technologies and network architectures are being discussed in order to satisfy the requirements in NR such as: a system with large capacity; high-speed data transmission; low latency; simultaneous connections of a large number of terminals; low cost; power saving; and the like (for example, Non-Patent Document 1).

Further, in the 3GPP (Registered Trademark) standardization, supporting of the enhanced industrial IoT (Enhanced Industrial Internet of Things) and URLLC (Ultra-Reliable and Low Latency Communications) is being discussed. On the other hand, NR-U (NR Unlicensed) for performing communication using the unlicensed band is being discussed. In NR-U, for example, LBT (Listen Before Talk) is specified as a channel access method.

[Citation List]

[Non-Patent Document]

[Non-Patent Document 1] 3GPP TS 38.300 V16.5.0 (2021-03)

SUMMARY OF THE INVENTION

[TECHNICAL PROBLEM]

With respect to the UL configured grant (Uplink Configured grant), the functional enhancement has been discussed independently in each of NR-U and URLLC/IIoT. As a result, there is a case in which operations related to the UL configured grant are not aligned with each other between NR-U and URLLC/IIoT. Furthermore, a URLLC operation is assumed to be performed in NR-U.

The present invention has been made in view of the above points, and it is an object of the present invention to operate the uplink configured grant in which an unlicensed band is used in a wireless communication system.

[SOLUTION TO PROBLEM]

According to the disclosed technology, a terminal is provided. The terminal includes: a control unit configured to determine whether COT (Channel occupancy time) sharing information is to be included in CG-UCI (Configured grant - Uplink control information) independently from information other than the COT sharing information; and a transmission unit configured to transmit the CG-UCI to a base station via a shared channel according to CG.

[ADVANTAGEOUS EFFECTS OF INVENTION]

According to the disclosed technology, it is possible to operate the uplink configured grant in which an unlicensed band is used in a wireless communication system.

BRIEF DESCRIPTION OF THE DRAWINGS

[Fig. 1] Fig. 1 is a drawing illustrating a wireless communication system according to an embodiment of the present invention.
[Fig. 2] Fig. 2 is a drawing illustrating transmission according to UL configured grant.
[Fig. 3] Fig. 3 is a flow chart illustrating an example (1) of transmission of COT sharing information in an embodiment of the present invention.
[Fig. 4] Fig. 4 is a flow chart illustrating an example (2) of transmission of COT sharing information in an embodiment of the present invention.

[Fig. 5] Fig. 5 is a flow chart illustrating an example (3) of transmission of COT sharing information in an embodiment of the present invention.

[Fig. 6] Fig. 6 is a flow chart illustrating an example (4) of transmission of COT sharing information in an embodiment of the present invention.

[Fig. 7] Fig. 7 is a flow chart illustrating an example (5) of transmission of COT sharing information in an embodiment of the present invention.

[Fig. 8] Fig. 8 is a drawing illustrating an example of a functional structure of a base station 10 in an embodiment of the present invention.

[Fig. 9] Fig. 9 is a drawing illustrating an example of a functional structure of a terminal 20 in an embodiment of the present invention.

[Fig. 10] Fig. 10 is a drawing illustrating an example of a hardware structure of the base station 10 or the terminal 20 according to an embodiment of the present invention.

DETAILED DESCRIPTION OF THE PREFERRED EMBODIMENTS

In the following, referring to the drawings, one or more embodiments of the present invention will be described. It should be noted that the embodiments described below are examples. Embodiments of the present invention are not limited to the following embodiments.

In operations of a wireless communication system according to an embodiment of the present invention, conventional techniques will be used appropriately. With respect to the above, for example, the conventional techniques are related to, but not limited to, the existing LTE. Further, it is assumed that the term "LTE" used in the present specification has, unless otherwise specifically mentioned, a broad meaning including a scheme of LTE-Advanced and a scheme after LTE-Advanced (e.g., NR).

Furthermore, in one or more embodiments described below, terms that are used in the existing LTE are used, such as SS (Synchronization signal), PSS (Primary SS), SSS (Secondary SS), PBCH (Physical broadcast channel), PRACH (Physical random access channel), PDCCH (Physical Downlink Control Channel), PDSCH (Physical Downlink Shared Channel), PUCCH (Physical Uplink Control Channel), PUSCH (Physical Uplink Shared Channel), etc. The above-described terms are used for the sake of description convenience. Signals, functions, etc., which are similar to the above-described terms, may be referred to as different names. Further, terms, which are used in NR and correspond to the above-described terms, are NR-SS, NR-PSS, NR-SSS, NR-PBCH, NR-PRACH, etc. However, even when a signal is used for NR, there may be a case in which the signal is not referred to as "NR-".

In addition, in an embodiment of the present invention, the duplex method may be a TDD (Time Division Duplex) method, an FDD (Frequency Division Duplex) method, or any other method (e.g., Flexible Duplex, or the like).

Further, in an embodiment of the present invention, the expression, radio (wireless) parameters are "configured (set)" may mean that a predetermined value is pre-configured, or may mean that a radio parameter indicated by the base station 10 or the terminal 20 is configured.

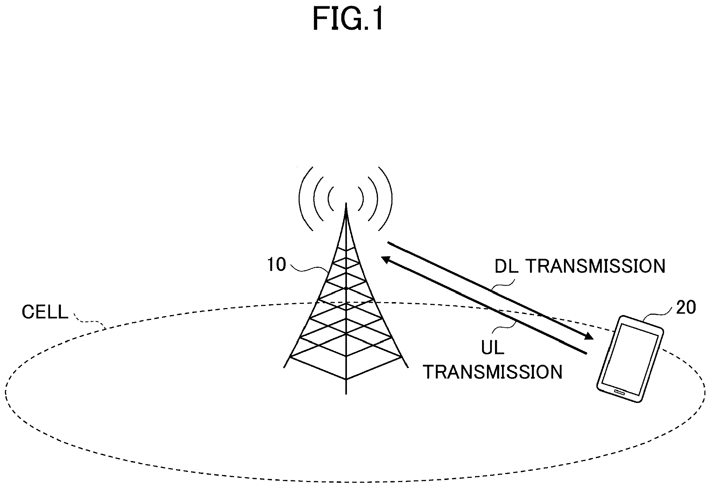

Fig. 1 is a drawing illustrating a wireless communication system according to an embodiment of the present invention. As illustrated in Fig. 1, a wireless communication system according to an embodiment of the present invention includes a base station 10 and a terminal 20. In Fig. 1, a single base station 10 and a single terminal 20 are illustrated as an example. There may be a plurality of base stations 10 and a plurality of terminals 20.

The base station 10 is a communication device that provides one or more cells and performs wireless communications with the terminal 20. Physical resources of radio signals may be defined in the time domain and the frequency domain, the time domain may be defined by the number of OFDM (Orthogonal Frequency Division Multiplexing) symbols, and the frequency domain may be defined by the number of sub-carriers or resource blocks. In addition, a TTI (Transmission Time Interval) in the time domain may be a slot or a sub-slot, or the TTI may be a subframe.

The base station 10 can perform carrier aggregation to communicate with the terminal 20 by bundling a plurality of cells (multiple CCs (component carriers)). In carrier aggregation, one primary cell (PCell) and one or more secondary cells (SCells) are used.

The base station 10 transmits a synchronization signal, system information, and the like, to the terminal 20. The synchronization signal is, for example, an NR-PSS and an NR-SSS. The system information may be transmitted via a NR-PBCH or a PDSCH, for example, and may be referred to as broadcast information. As shown in Fig. 1, the base station 10 transmits a control signal or data in DL (Downlink) to the terminal 20 and receives a control signal or data in UL (Uplink) from the terminal 20. Note that, here, what is transmitted via a control channel such as PUCCH and PDCCH is called a control signal, and what is transmitted via a shared channel such as PUSCH and PDSCH is called data. These names are mere examples.

The terminal 20 may be a communication apparatus that includes a wireless communication function such as a smart-phone, a mobile phone, a tablet, a wearable terminal, a communication module for M2M (Machine-to-Machine), or the like. As shown in FIG. 1, the terminal 20 uses various communication services provided by the wireless communication system by receiving control signals or data in DL from the base station 10 and transmitting control signals or data in UL to the base station 10. Note that the terminal 20 may be referred to as a UE, and the base station 10 may be referred to as a gNB.

The terminal 20 can perform carrier aggregation to communicate with the base station 10 by bundling a plurality of cells (a plurality of CCs). In carrier aggregation, one primary cell and one or more secondary cells are used. In addition, PUCCH-SCell having PUCCH may be used.

In the 3GPP (Registered Trademark) standardization, supporting of the enhanced industrial IoT (Enhanced Industrial Internet of Things) and URLLC (Ultra-Reliable and Low Latency Communications) is being discussed. On the other hand, NR-U (NR Unlicensed) for performing communication using the unlicensed band is being discussed.

With respect to the UL configured grant (Uplink Configured grant, hereinafter, also referred to as "UL-CG"), the functional enhancement has been discussed independently in each of NR-U and URLLC/IIoT. As a result, there is a case in which operations related to the UL configured grant are not aligned with each other between NR-U and URLLC/IIoT. Furthermore, a URLLC operation is assumed to be performed in NR-U. Therefore, resolving the mismatch of operations related to the UL configured grant between NR-U and URLLC/IIoT is being discussed.

For example, as a UL enhancement for URLLC in an environment controlled by NR-U, supporting of UE initiated COT (UE initiated Channel occupancy time) for FBE (Frame Based Equipment) that performs LBT based on a fixed carrier sensing period at a predetermined cycle is being discussed. Further, an enhancement for resolving the mismatch between an operation related to UL configured grant in NR-U and URLLC that is applied in the unlicensed band is being discussed.

With respect to operations related to UL-CG, there are differences between the conventional NR-U and the conventional URLLC as shown in 1) to 4) below.

1) In URLLC, HARQ (Hybrid automatic repeat request) process number (HARQ process number, HPN)/ID is calculated by being associated with a position of configured or indicated CG-PUSCH in the time domain. On the other hand, in NR-U, HPN/ID is determined by the UE and reported to the base station by using CG-UCI (Configured grant - Uplink control information) that is to be multiplexed with CG-PUSCH.

2) In URLLC, regarding the RV (Redundancy version), which of three types of RV is to be configured is determined by being associated with a position of configured or indicated CG-PUSCH in the time domain. On the other hand, in NR-U, RV is determined by the UE and reported to the base station by using CG-UCI that is to be multiplexed with CG-PUSCH.

3) In URLLC, CG-DFI (Downlink feedback information) is not supported. In a case where UL grant for rescheduling is not received, the UE assumes ACK. On the other hand, in NR-U, CG-DFI is supported, and, in a case where CG-DFI is not received, the UE assumes NACK.

4) In URLLC, CG retransmission timer is not supported. On the other hand, in NR-U, CG retransmission timer is supported. In other words, in NR-U, retransmission of CG-PUSCH according to a timer can be performed.

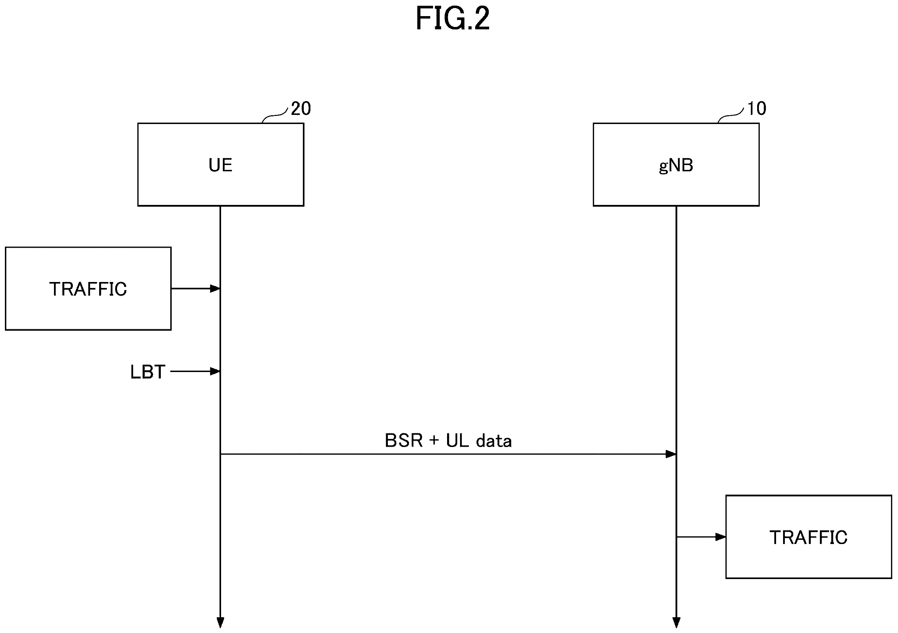

Fig. 2 is a drawing illustrating transmission according to UL configured grant. As illustrated in Fig. 2, when UL-CG is configured, in response to traffic occurrence in the UE, the UE performs LBT, and transmits BSR (Buffer Status Report) and UL data to the gNB if LBT is successful.

In addition, in NR-U, retransmission of CG-PUSCH is supported. HPN, RV, NDI (New data indicator) and COT sharing information are indicated to the gNB by using CG-UCI that is to be multiplexed with CG-PUSCH. HARQ-ACK corresponding to all UL-HARQ processes is indicated by CG-DFI included in DCI format 0_1.

For example, regarding UL-CG, the following options may be applied.

Option 1) In the unlicensed band, the procedure based on CG-UCI and the procedure based on CG-DFI may be both enabled or disabled by an RRC parameter. The RRC parameter may be, for example, "cg-RetransmissionTimer-r16".

Option 2-a) In the unlicensed band, the procedure based on CG-UCI and the procedure based on CG-DFI may be independently enabled or disabled by corresponding RRC parameters. The RRC parameters may be, for example, a new parameter "X" and "cg-RetransmissionTimer-r16".

Option 2-b) In the unlicensed band, the procedure based on CG-UCI and the procedure based on CG-DFI may be independently enabled or disabled by corresponding RRC parameters. The RRC parameters may be, for example, a new parameter "X" and a new parameter "Y".

Option 3) The procedure based on CG-UCI may be supported in the unlicensed band. The procedure based on CG-DFI may be enabled or disabled by an RRC parameter. The RRC parameter may be, for example, "cg-RetransmissionTimer-r16".

The CG-UCI includes, other than HPN, RV, and NDI that are determined by the UE itself in accordance with the automatic CG-PUSCH retransmission and CG-DFI, the COT sharing information for sharing the UE initiated COT with the gNB. Table 1 illustrates fields of CG-UCI.

[Table 1]

| Field | Bitwidth |
|---|---|
| HARQ process number | 4 |
| Redundancy version | 2 |
| New data indicator | 1 |
| Channel Occupancy Time (COT) sharing information | $\lceil log_2 C \rceil$ : In a case where upper layer parameters ul-toDL-COT-SharingED-Threshold and cg-COT-SharingList are configured. The bitwidth is specified by the number of combinations C that is configured in cg-COT-SharingList.<br>1: In a case where an upper layer parameter ul-toDL-COT-SharingED-Threshold is not configured and where an upper layer parameter cg-COT-SharingOffset is configured.<br>0: In other cases. |
| | Note that, in a case where the UE indicates COT sharing other than "no sharing" in a CG PUSCH within the UE-initiated COT, the UE indicates COT sharing information in all the subsequent CG PUSCHs occurring within the same UE-initiated COT that maintains the same DL starting point and duration. |

As shown in Table 1, CG-UCI may include the HARQ process number, RV, NDI, and COT sharing information. As shown in Table 1, with respect to the bitwidth of the COT sharing information, there is a case in which the bitwidth is determined by the number of combinations C that is configured in "cg-COT-SharingList", and there is a case in which the bitwidth is 1 or 0.

Here, with respect to the option 1) or the option 2-a), an example of combinations of enabled or disabled of CG-UCI, CG-DFI, and cg-RetransmissionTimer-r16 is shown in Table 2.

[Table 2]

| | CG-UCI | CG-DFI | cg-RetransmissionTimer-r16 |
|---|---|---|---|
| URLLC operation: Option 1 and Option 2-a | 0 | 0 | 0 |
| Option 2-a combination 1 | 0 | 1 | 1 |
| Option 2-a combination 2 | 1 | 0 | 0 |
| NR-U operation: Option 1 and Option 2-a | 1 | 1 | 1 |

In Table 2, 0 indicates disabled, and 1 indicates enabled. As illustrated in Table 2, in any one of the option 1) or the option 2-a), CG-UCI is enabled or disabled by the parameter X or cg-RetransmissionTimer-r16 that enables or disables CG-UCI.

Here, in a case where CG-PUSCH automatic retransmission and CG-DFI are disabled, while HPN, RV, and NDI of the CG-UCI fields are determined based on the URLLC operation, and thus, are not needed, the COT sharing information is assumed to be useful in operations of both URLLC and NR-U.

In addition, when CG-UCI is enabled or disabled based on a single parameter X or cg-RetransmissionTimer-r16 alone, in a case where CG-PUSCH automatic retransmission and CG-DFI are disabled, HPN, RV, and NDI will become unnecessary overhead in a case where CG-UCI is enabled, and the COT sharing information will become unavailable in a case where CG-UCI is disabled.

Therefore, whether to include the COT sharing information in CG-UCI may be determined independently from at least one of other information items (HPN, RV, NDI). For example, the transmission necessity or un-necessity of each of the COT sharing information and other information items may be configured by a different upper layer parameter. In addition, for example, the COT sharing information may be always transmitted or may be always not transmitted regardless of the transmission configuration of the information items other than the COT sharing information. In addition, for example, the COT sharing information may be transmitted in a case where a specific condition is satisfied regardless of the transmission configuration of the information items other than the COT sharing information.

In addition, in a case where the COT sharing information alone is to be transmitted or the other information items (HPN, RV, NDI) alone are to be transmitted, information to be transmitted may be treated in the same way as the existing CG-UCI, or information to be transmitted may be treated as UCI different from the existing CG-UCI.

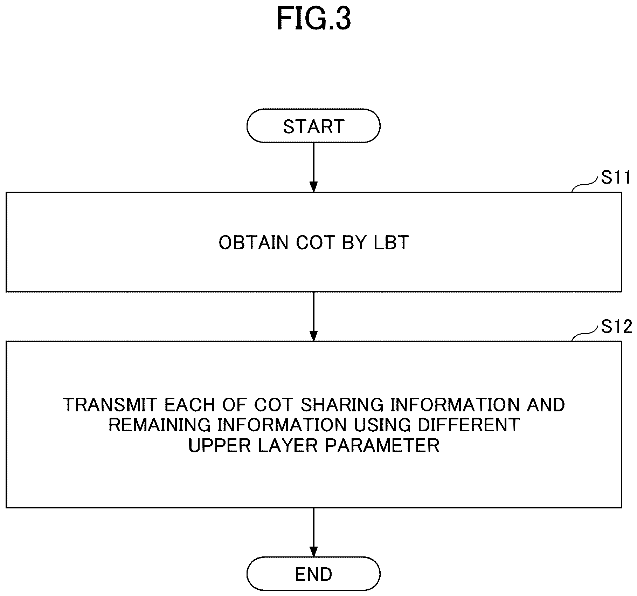

Fig. 3 is a flow chart illustrating an example (1) of transmission of COT sharing information in an embodiment of the present invention. In step S11, the terminal 20 obtains COT by LBT. In subsequent step S12, the terminal 20 transmits the COT sharing information and information other than the COT sharing information, based on corresponding different upper layer parameters. Note that the terminal 20 may transmit CG-PUSCH within the COT obtained by the base station 10 without using the COT obtained by LBT by the terminal 20 itself.

For example, the COT sharing information may be transmitted based on a new parameter Y. In addition, for example, the COT sharing information may be transmitted in a case where an upper layer parameter "ul-toDL-COT-SharingED-Threshold" and an upper layer parameter "cg-COT-SharingList" are both configured. In addition, for example, the COT sharing information may be transmitted in a case where the upper layer parameter "ul-toDL-COT-SharingED-Threshold" is not configured and where an upper layer parameter "cg-COT-SharingOffset" is configured.

For example, information items other than the COT sharing information (HPN, RV, NDI) may be transmitted based on the parameter X or cg-RetransmissionTimer-r16.

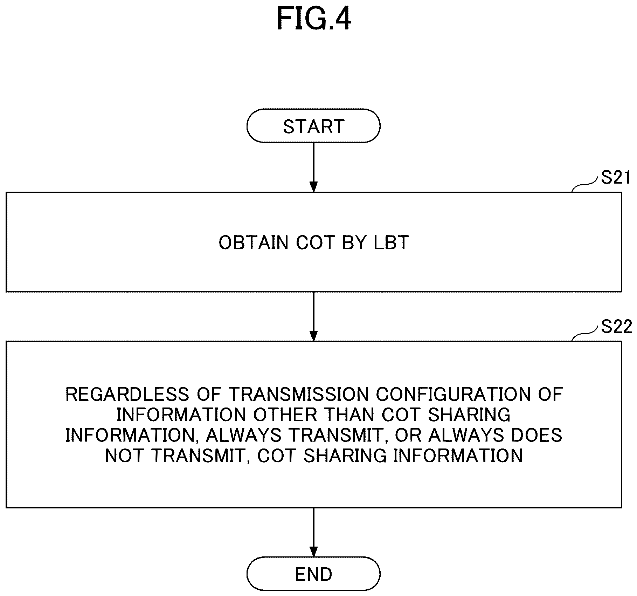

Fig. 4 is a flow chart illustrating an example (2) of transmission of COT sharing information in an embodiment of the present invention. In step S21, the terminal 20 obtains COT by LBT. In subsequent step S22, the COT sharing information may be always transmitted by the terminal 20 or may be always not transmitted by the terminal 20 regardless of the transmission configuration of the information items other than the COT sharing information (HPN, RV, NDI).

For example, the COT sharing information is to be always transmitted or always not to be transmitted may be defined by the technical specification. In a case where the COT sharing information is to be always transmitted, the terminal 20 may assume that the upper layer parameter "ul-toDL-COT-SharingED-Threshold" and the upper layer parameter "cg-COT-SharingList" are both configured. In addition, in a case where the COT sharing information is to be always transmitted, the terminal 20 may assume that the upper layer parameter "ul-toDL-COT-SharingED-Threshold" is to be not configured and that the upper layer parameter "cg-COT-SharingOffset" is to be configured.

For example, information items other than the COT sharing information (HPN, RV, NDI) may be transmitted based on the parameter X or cg-RetransmissionTimer-r16.

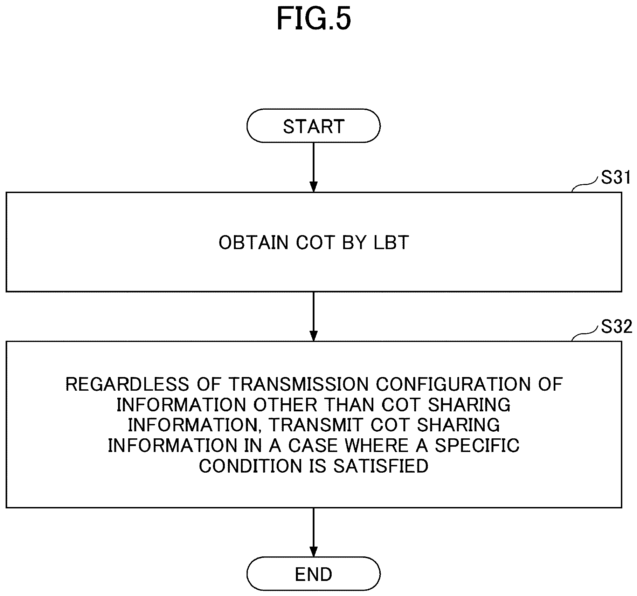

Fig. 5 is a flow chart illustrating an example (3) of transmission of COT sharing information in an embodiment of the present invention. In step S31, the terminal 20 obtains COT by LBT. In subsequent step S32, the terminal 20 may transmit the COT sharing information in a case where a specific condition is satisfied regardless of the transmission configuration of the information items other than the COT sharing information (HPN, RV, NDI).

For example, the terminal 20 may transmit the COT sharing information in a case where CG automatic retransmission and/or CG-DFI are configured to be enabled by cg-RetransmissionTimer-r16. In addition, for example, the terminal 20 may transmit the COT sharing information in a case where CG automatic retransmission and/or CG-DFI are configured to be disabled by cg-RetransmissionTimer-r16.

For example, information items other than the COT sharing information (HPN, RV, NDI) may be transmitted based on the parameter X or cg-RetransmissionTimer-r16.

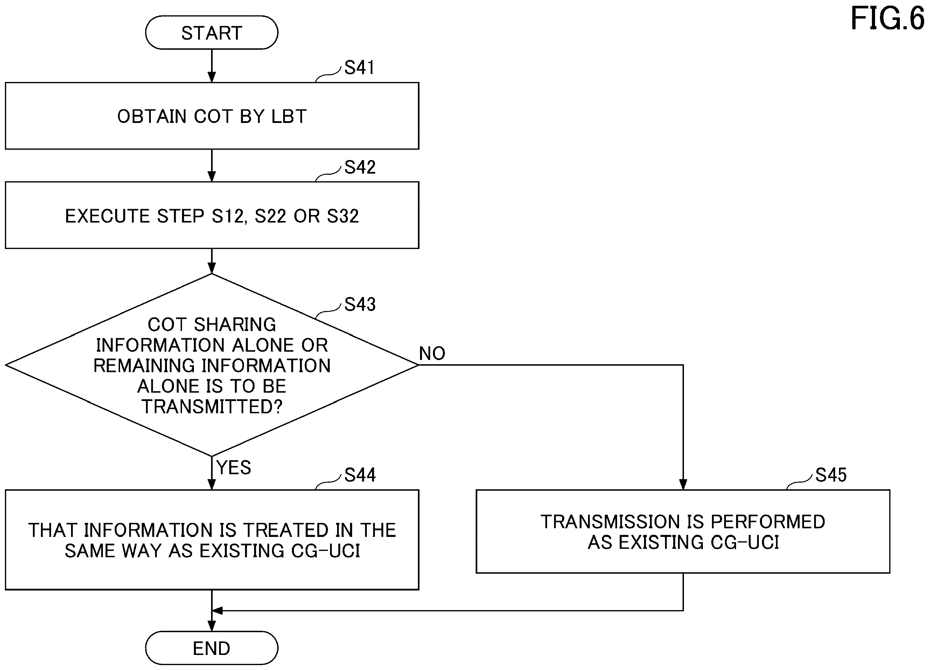

Fig. 6 is a flow chart illustrating an example (4) of transmission of COT sharing information in an embodiment of the present invention. In step S41, the terminal 20 obtains COT by LBT. In subsequent step S42, the terminal 20 performs step S12, S22 or S32. In subsequent step S43, the terminal 20 determines whether only one of the COT sharing information or the information items other than the COT sharing information (HPN, RV, NDI) is to be transmitted. In a case where the only one is to be transmitted (YES in S43), the process proceeds to step S44, and in a case where the only one is not to be transmitted, the process proceeds to step S45. In step S44, the terminal 20 treats the information in the same way as the existing CG-UCI. In step S45, the terminal 20 performs transmission as the existing CG-UCI.

For example, CG-UCI may be multiplexed as described below. In a case where CG-PUSCH overlaps with PUCCH, CG-UCI including one of the COT sharing information or the information other than the COT sharing information (HPN, RV, NDI) may be jointly encoded with HARQ-ACK. In addition, in a case where a parameter cg-UCI-Multiplexing is configured, the terminal 20 may multiplex the HARQ-ACK information into CG-PUSCH including CG-UCI. In a case where the parameter cg-UCI-Multiplexing is not configured, the terminal 20 may multiplex the HARQ-ACK information into PUCCH or into another PUSCH transmission.

For example, an offset may be configured to CG-UCI as described below. In a case where an offset value is indicated by a parameter betaOffsetCG-UCI, the terminal 20 may multiplex CG-UCI into CG-PUSCH. The terminal 20 may jointly encode the HARQ-ACK information and CG-UCI. The terminal 20 may determine the number of resources for transmitting the multiplexed information by using the offset value. For example, the offset value used for multiplexing of up to 11 bits may be different from the offset value used for multiplexing of more than 11 bits.

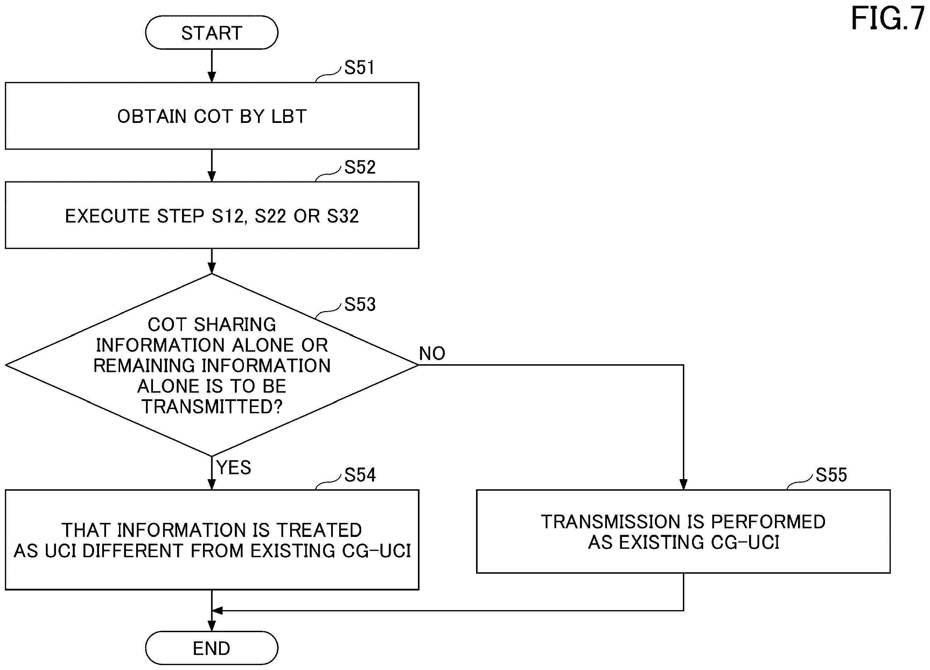

Fig. 7 is a flow chart illustrating an example (4) of transmission of COT sharing information in an embodiment of the present invention. In step S51, the terminal 20 obtains COT by LBT. In subsequent step S52, the terminal 20 performs step S12, S22 or S32. In subsequent step S53, the terminal 20 determines whether only one of the COT sharing information or the information items other than the COT sharing information (HPN, RV, NDI) is to be transmitted. In a case where the only one is to be transmitted (YES in S53), the process proceeds to step S54, and in a case where the only one is not to be transmitted, the process proceeds to step S55. In step S54, the terminal 20 treats the information as UCI different from the existing CG-UCI. In step S55, the terminal 20 performs transmission as the existing CG-UCI. Hereinafter, the different UCI is referred to as CG-UCI2.

For example, multiplexing may be performed to the CG-UCI2 as described below. In a case where CG-PUSCH overlaps with PUCCH, the CG-UCI2 including one of the COT sharing information or the information other than the COT sharing information (HPN, RV, NDI) may be jointly encoded with HARQ-ACK. In addition, in a case where a parameter cg-UCI2-Multiplexing is configured, the terminal 20 may multiplex the HARQ-ACK information into CG-PUSCH including CG-UCI2. In a case where the parameter cg-UCI2-Multiplexing is not configured, the terminal 20 may multiplex the HARQ-ACK information into PUCCH or into another PUSCH transmission.

For example, an offset that is different from the offset of CG-UCI may be configured to CG-UCI2 as described below. In a case where an offset value is indicated by a parameter betaOffsetCG-UCI2, the terminal 20 may multiplex CG-UCI2 into CG-PUSCH. The terminal 20 may jointly encode the HARQ-ACK information and CG-UCI2. The terminal 20 may determine the number of resources for transmitting the multiplexed information by using the offset value. For example, the offset value used for multiplexing of up to 11 bits may be different from the offset value used for multiplexing of more than 11 bits.

In addition, CG-UCI2 may be treated in the same way as SR or CSI. In addition, the UE is not required to assume multiplexing CG-UCI2 and other UCIs.

The terminal 20 may report, to the base station 10, the capability of transmitting the COT sharing information alone or the CG-UCI information other than the COT sharing information (HPN, RV, NDI) alone as a UE capability.

According to an embodiment of the present invention described above, in NR-U, the terminal 20 can report the COT sharing information to the base station 10, and can perform PUSCH transmission according to UL-CG that supports URLLC.

That is, it is an object to operate the uplink configured grant in which an unlicensed band is used in a wireless communication system.

(Device configuration)

Next, a functional configuration example of the base station 10 and the terminal 20 for performing the processes and operations described above will be described. The base station 10 and terminal 20 include functions for implementing the embodiments described above. It should be noted, however, that each of the base stations 10 and the terminal 20 may include only one of the functions in an embodiment of the present invention.

<Base station 10>

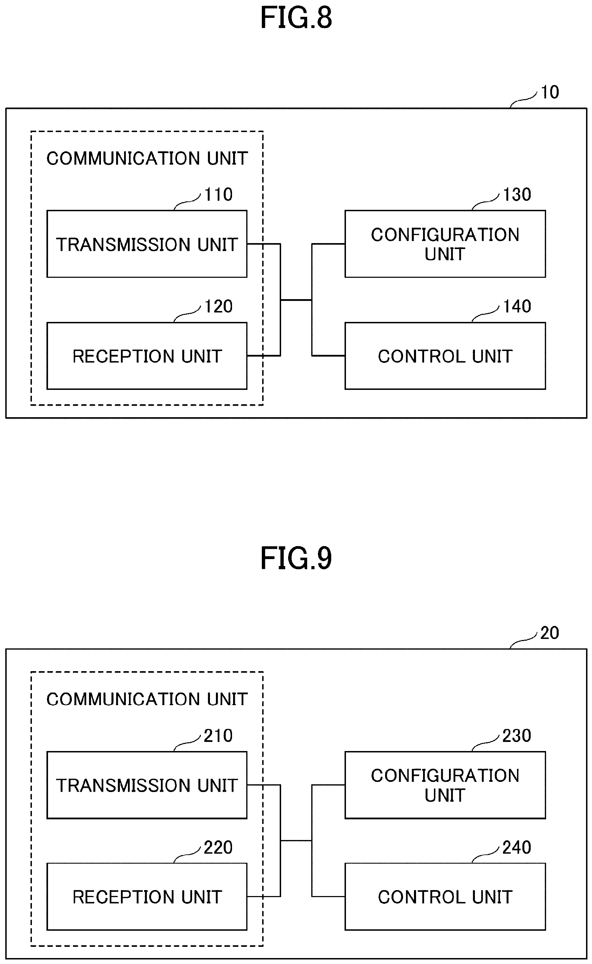

Fig. 8 is a diagram illustrating an example of a functional configuration of the base station 10. As shown in Fig. 8, the base station 10 includes a transmission unit 110, a reception unit 120, a configuration unit 130, and a control unit 140. The functional structure illustrated in Fig. 8 is merely an example. Functional divisions and names of functional units may be anything as long as operations according to an embodiment of the present invention can be performed. The transmission unit 110 and the reception unit 120 may be referred to as a communication unit.

The transmission unit 110 includes a function for generating a signal to be transmitted to the terminal 20 side and transmitting the signal wirelessly. The reception unit 120 includes a function for receiving various signals transmitted from the terminal 20 and acquiring, for example, information of a higher layer from the received signals. Further, the transmission unit 110 has a function of transmitting NR-PSS, NR-SSS, NR-PBCH, DL/UL control signals, the DL data, and the like, to the terminal 20. In addition, the transmission unit 110 transmits configuration information, or the like, described in the embodiment.

The configuration unit 130 stores preset configuration information and various configuration information items to be transmitted to the terminal 20 in a storage apparatus and reads the preset configuration information from the storage apparatus if necessary. The control unit 140 performs, for example, resource allocation and control of the entire base station 10. Note the functional unit related to signal transmission in the control unit 140 may be included in the transmission unit 110, and the functional unit related to signal reception in the control unit 140 may be included in the reception unit 120. Further, the transmission unit 110 and the reception unit 120 may be referred to as a transmitter and a receiver, respectively.

<Terminal 20>

Fig. 9 is a diagram illustrating an example of a functional configuration of the terminal 20. As shown in FIG. 9, the terminal 20 includes a transmission unit 210, a reception unit 220, a configuration unit 230, and a control unit 240. The functional structure illustrated in Fig. 9 is merely an example. Functional divisions and names of functional units may be anything as long as operations according to an embodiment of the present invention can be performed. The transmission unit 210 and the reception unit 220 may be referred to as a communication unit.

The transmission unit 210 generates a transmission signal from transmission data and transmits the transmission signal wirelessly. The reception unit 220 receives various signals wirelessly and obtains upper layer signals from the received physical layer signals. In addition, the transmission unit 210 transmits a HARQ-ACK, and the reception unit 220 receives configuration information described in the embodiment.

The configuration unit 230 stores, in a storage device, various configuration information items received from the base station 10 via the reception unit 220, and reads them from the storage device if necessary. In addition, the configuration unit 230 also stores pre-configured configuration information. The control unit 240 controls the entire terminal 20. Note the functional unit related to signal transmission in the control unit 240 may be included in the transmission unit 210, and the functional unit related to signal reception in the control unit 240 may be included in the reception unit 220. Further, the transmission unit 210 and the reception unit 220 may be referred to as a transmitter and a receiver, respectively.

(Hardware structure)

In the above functional structure diagrams used for describing an embodiment of the present invention (Fig. 8 and Fig. 9), functional unit blocks are shown. The functional blocks (function units) are realized by a freely-selected combination of hardware and/or software. Further, realizing means of each functional block is not limited in particular. In other words, each functional block may be realized by a single apparatus in which multiple elements are coupled physically and/or logically, or may be realized by two or more apparatuses that are physically and/or logically separated and are physically and/or logically connected (e.g., wired and/or wireless). The functional blocks may be realized by combining the above-described one or more apparatuses with software.

Functions include, but are not limited to, judging, determining, calculating, processing, deriving, investigating, searching, checking, receiving, transmitting, outputting, accessing, resolving, selecting, establishing, comparing, assuming, expecting, and deeming, broadcasting, notifying, communicating, forwarding, configuring, reconfiguring, allocating, mapping, and assigning, etc. For example, a functional block (component) that functions to perform transmission is called a transmitting unit or a transmitter. In either case, as described above, the implementation method is not particularly limited.

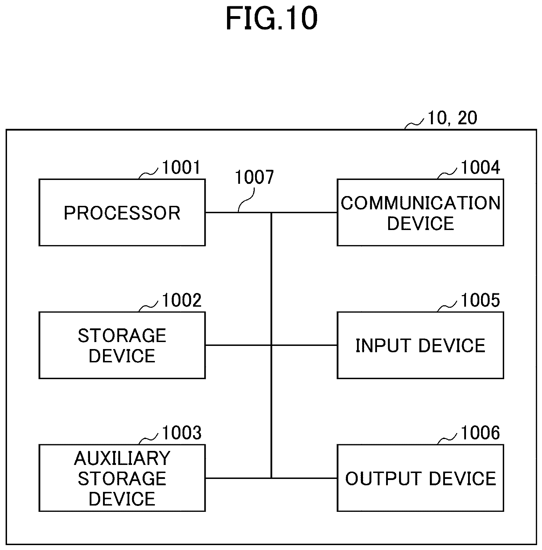

For example, the base station 10, terminal 20, etc., according to an embodiment of the present disclosure may function as a computer for processing the radio communication method of the present disclosure. Fig. 10 is a drawing illustrating an example of hardware structures of the base station 10 and terminal 20 according to an embodiment of the present invention. Each of the above-described base station 10 and the terminal 20 may be physically a computer device including a processor 1001, a storage device 1002, an auxiliary storage device 1003, a communication device 1004, an input device 1005, an output device 1006, a bus 1007, etc.

It should be noted that, in the descriptions below, the term "apparatus" can be read as a circuit, a device, a unit, etc. The hardware structures of the base station 10 and terminal 20 may include one or more of each of the devices illustrated in the figure, or may not include some devices.

Each function in the base station 10 and terminal 20 is realized by having the processor 1001 perform an operation by reading predetermined software (programs) onto hardware such as the processor 1001 and the storage device 1002, and by controlling communication by the communication device 1004 and controlling at least one of reading and writing of data in the storage device 1002 and the auxiliary storage device 1003.

The processor 1001 controls the entire computer by, for example, controlling the operating system. The processor 1001 may include a central processing unit (CPU) including an interface with a peripheral apparatus, a control apparatus, a calculation apparatus, a register, etc. For example, the above-described control unit 140, control unit 240, and the like, may be implemented by the processor 1001.

Further, the processor 1001 reads out onto the storage device 1002 a program (program code), a software module, or data from the auxiliary storage device 1003 and/or the communication device 1004, and performs various processes according to the program, the software module, or the data. As the program, a program is used that causes the computer to perform at least a part of operations according to an embodiment of the present invention described above. For example, the control unit 140 of the base station 10 illustrated in Fig. 8 may be realized by control programs that are stored in the storage device 1002 and are executed by the processor 1001. Further, for example, the control unit 240 of the terminal 20 illustrated in Fig. 9 may be realized by control programs that are stored in the storage device 1002 and are executed by the processor 1001. The various processes have been described to be performed by a single processor 1001. However, the processes may be performed by two or more processors 1001 simultaneously or sequentially. The processor 1001 may be implemented by one or more chips. It should be noted that the program may be transmitted from a network via a telecommunication line.

The storage device 1002 is a computer-readable recording medium, and may include at least one of a ROM (Read Only Memory), an EPROM (Erasable Programmable ROM), an EEPROM (Electrically Erasable Programmable ROM), a RAM (Random Access Memory), etc. The storage device 1002 may be referred to as a register, a cache, a main memory, etc. The storage device 1002 is capable of storing programs (program codes), software modules, or the like, that are executable for performing communication processes according to an embodiment of the present invention.

The auxiliary storage device 1003 is a computer-readable recording medium, and may include at least one of, for example, an optical disk such as a CD-ROM (Compact Disc ROM), a hard disk drive, a flexible disk, a magneto optical disk (e.g., compact disk, digital versatile disk, Blu-ray (registered trademark) disk), a smart card, a flash memory (e.g., card, stick, key drive), a floppy (registered trademark) disk, a magnetic strip, etc. The above recording medium may be a database including the storage device 1002 and/or the auxiliary storage device 1003, a server, or any other appropriate medium.

The communication device 1004 is hardware (transmission and reception device) for communicating with computers via at least one of a wired network and a wireless network, and may be referred to as a network device, a network controller, a network card, a communication module, etc. The communication device 1004 may include a high frequency switch, duplexer, filter, frequency synthesizer, or the like, for example, to implement at least one of a frequency division duplex (FDD) and a time division duplex (TDD). For example, the transmitting/receiving antenna, the amplifier unit, the transmitting/receiving unit, the transmission line interface, and the like, may be implemented by the communication device 1004. The transmitting/receiving unit may be physically or logically divided into a transmitting unit and a receiving unit.

The input device 1005 is an input device that receives an external input (e.g., keyboard, mouse, microphone, switch, button, sensor). The output device 1006 is an output device that outputs something to the outside (e.g., display, speaker, LED lamp). It should be noted that the input device 1005 and the output device 1006 may be integrated into a single device (e.g., touch panel).

Further, the apparatuses including the processor 1001, the storage device 1002, etc., are connected to each other via the bus 1007 used for communicating information. The bus 1007 may include a single bus, or may include different buses between the apparatuses.

Further, each of the base station 10 and the terminal 20 may include hardware such as a microprocessor, a digital signal processor (DSP), an ASIC (Application Specific Integrated Circuit), a PLD (Programmable Logic Device), a FPGA (Field Programmable Gate Array), etc., and a part or all of each functional block may be realized by the hardware. For example, the processor 1001 may be implemented by at least one of the above hardware elements.

(Embodiment summary)

As described above, according to an embodiment of the present invention, a terminal is provided. The terminal includes: a control unit configured to determine whether COT (Channel occupancy time) sharing information is to be included in CG-UCI (Configured grant - Uplink control information) independently from information other than the COT sharing information; and a transmission unit configured to transmit the CG-UCI to a base station via a shared channel according to CG.

According to the above-described configuration, in NR-U, the terminal 20 can report the COT sharing information to the base station 10, and can perform PUSCH transmission according to UL-CG that supports URLLC. That is, it is an object to operate the uplink configured grant in which an unlicensed band is used in a wireless communication system.

The information other than the COT sharing information may be at least one of HPN (Hybrid automatic repeat request process number), RV (Redundancy version) and NDI (New data indicator). According to the above-described configuration, in NR-U, the terminal 20 can report the COT sharing information to the base station 10, and can perform PUSCH transmission according to UL-CG that supports URLLC.

A parameter for determining whether to include the COT sharing information in the CG-UCI may be different from a parameter for determining whether to include the information other than the COT sharing information in the CG-UCI. According to the above-described configuration, in NR-U, the terminal 20 can report the COT sharing information to the base station 10, and can perform PUSCH transmission according to UL-CG that supports URLLC.

The control unit may always include the COT sharing information in the CG-UCI regardless of transmission configuration of the information other than the COT sharing information. According to the above-described configuration, in NR-U, the terminal 20 can report the COT sharing information to the base station 10, and can perform PUSCH transmission according to UL-CG that supports URLLC.

In a case where the COT sharing information alone or the information other than the COT sharing information alone is to be transmitted, the control unit may include the COT sharing information alone or the information other than the COT sharing information alone in the CG-UCI. According to the above-described configuration, in NR-U, the terminal 20 can report the COT sharing information to the base station 10, and can perform PUSCH transmission according to UL-CG that supports URLLC.

In addition, according to an embodiment of the present invention, a communication method performed by a terminal is provided. The communication method includes: determining whether COT (Channel occupancy time) sharing information is to be included in CG-UCI (Configured grant - Uplink control information) independently from information other than the COT sharing information; and transmitting the CG-UCI to a base station via a shared channel according to CG.

According to the above-described configuration, in NR-U, the terminal 20 can report the COT sharing information to the base station 10, and can perform PUSCH transmission according to UL-CG that supports URLLC. That is, it is an object to operate the uplink configured grant in which an unlicensed band is used in a wireless communication system.

(Supplement of embodiment)

As described above, one or more embodiments have been described. The present invention is not limited to the above embodiments. A person skilled in the art should understand that there are various modifications, variations, alternatives, replacements, etc., of the embodiments. In order to facilitate understanding of the present invention, specific values have been used in the description. However, unless otherwise specified, those values are merely examples and other appropriate values may be used. The division of the described items may not be essential to the present invention. The things that have been described in two or more items may be used in a combination if necessary, and the thing that has been described in one item may be appropriately applied to another item (as long as there is no contradiction). Boundaries of functional units or processing units in the functional block diagrams do not necessarily correspond to the boundaries of physical parts. Operations of multiple functional units may be physically performed by a single part, or an operation of a single functional unit may be physically performed by multiple parts. The order of sequences and flowcharts described in an embodiment of the present invention may be changed as long as there is no contradiction. For the sake of description convenience, the base station 10 and the terminal 20 have been described by using functional block diagrams. However, the apparatuses may be realized by hardware, software, or a combination of hardware and software. The software executed by a processor included in the base station 10 according to an embodiment of the present invention and the software executed by a processor included in the terminal 20 according to an embodiment of the present invention may be stored in a random access memory (RAM), a flash memory, a read only memory (ROM), an EPROM, an EEPROM, a register, a hard disk (HDD), a removable disk, a CD-ROM, a database, a server, or any other appropriate recording medium.

Further, information indication may be performed not only by methods described in an aspect/embodiment of the present specification but also a method other than those described in an aspect/embodiment of the present specification. For example, the information transmission may be performed by physical layer signaling (e.g., DCI (Downlink Control Information), UCI (Uplink Control Information)), upper layer signaling (e.g., RRC (Radio Resource Control) signaling, MAC (Medium Access Control) signaling, broadcast information (MIB (Master Information Block), SIB (System Information Block))), other signals, or combinations thereof. Further, RRC signaling may be referred to as an RRC message. The RRC signaling may be, for example, an RRC connection setup message, an RRC connection reconfiguration message, or the like.

Each aspect/embodiment described in the present disclosure may be applied to at least one of a system using LTE (Long Term Evolution), LTE-A (LTE-Advanced), SUPER 3G, IMT-Advanced, 4G (4th generation mobile communication system), 5G (5th generation mobile communication system), FRA (Future Radio Access), NR (new Radio), W-CDMA (registered trademark), GSM (registered trademark), CDMA2000, UMB (Ultra Mobile Broadband), IEEE 802.11 (Wi-Fi (registered trademark)), IEEE 802.16 (WiMAX (registered trademark)), IEEE 802.20, UWB (Ultra-WideBand), Bluetooth (registered trademark), and other appropriate systems, and a next generation system enhanced therefrom. Further, multiple systems may also be applied in combination (e.g., at least one of LTE and LTE-A combined with 5G, etc.).

The order of processing steps, sequences, flowcharts or the like of an aspect/embodiment described in the present specification may be changed as long as there is no contradiction. For example, in a method described in the present specification, elements of various steps are presented in an exemplary order. The order is not limited to the presented specific order.

The particular operations, that are supposed to be performed by the base station 10 in the present specification, may be performed by an upper node in some cases. In a network including one or more network nodes including the base station 10, it is apparent that various operations performed for communicating with the terminal 20 may be performed by the base station 10 and/or another network node other than the base station 10 (for example, but not limited to, MME or S-GW). According to the above, a case is described in which there is a single network node other than the base station 10. However, a combination of multiple other network nodes may be considered (e.g., MME and S-GW).

The information or signals described in this disclosure may be output from a higher layer (or lower layer) to a lower layer (or higher layer). The information or signals may be input or output through multiple network nodes.

The input or output information may be stored in a specific location (e.g., memory) or managed using management tables. The input or output information may be overwritten, updated, or added. The information that has been output may be deleted. The information that has been input may be transmitted to another apparatus.

A decision or a determination in an embodiment of the present invention may be realized by a value (0 or 1) represented by one bit, by a boolean value (true or false), or by comparison of numerical values (e.g., comparison with a predetermined value).

Software should be broadly interpreted to mean, whether referred to as software, firmware, middle-ware, microcode, hardware description language, or any other name, instructions, instruction sets, codes, code segments, program codes, programs, subprograms, software modules, applications, software applications, software packages, routines, subroutines, objects, executable files, executable threads, procedures, functions, and the like.

Further, software, instructions, information, and the like may be transmitted and received via a transmission medium. For example, in the case where software is transmitted from a website, server, or other remote source using at least one of wired line technologies (such as coaxial cable, fiber optic cable, twisted pair, digital subscriber line (DSL) and wireless technologies (infrared, microwave, etc.), at least one of these wired line technologies and wireless technologies is included within the definition of the transmission medium.

Information, a signal, or the like, described in the present specification may represented by using any one of various different technologies. For example, data, an instruction, a command, information, a signal, a bit, a symbol, a chip, or the like, described throughout the present application, may be represented by a voltage, an electric current, electromagnetic waves, magnetic fields, a magnetic particle, optical fields, a photon, or a combination thereof.

It should be noted that a term used in the present specification and/or a term required for understanding of the present specification may be replaced by a term having the same or similar meaning. For example, a channel and/or a symbol may be a signal (signaling). Further, a signal may be a message. Further, the component carrier (CC) may be referred to as a carrier frequency, cell, frequency carrier, or the like.

As used in the present disclosure, the terms "system" and "network" are used interchangeably.

Further, the information, parameters, and the like, described in the present disclosure may be expressed using absolute values, relative values from predetermined values, or they may be expressed using corresponding different information. For example, a radio resource may be what is indicated by an index.

The names used for the parameters described above are not used as limitations. Further, the mathematical equations using these parameters may differ from those explicitly disclosed in the present disclosure. Because the various channels (e.g., PUCCH, PDCCH) and information elements may be identified by any suitable names, the various names assigned to these various channels and information elements are not used as limitations.

In the present disclosure, the terms "BS: Base Station", "Radio Base Station", "Base Station", "Fixed Station", "NodeB", "eNodeB (eNB)", "gNodeB (gNB)", "Access Point", "Transmission Point", "Reception Point", "Transmission/Reception Point", "Cell", "Sector", "Cell Group", "Carrier", "Component Carrier", and the like, may be used interchangeably. The base station may be referred to as a macro-cell, a small cell, a femtocell, a picocell and the like.

The base station may accommodate (provide) one or more (e.g., three) cells. In the case where the base station accommodates a plurality of cells, the entire coverage area of the base station may be divided into a plurality of smaller areas, each smaller area may provide communication services by means of a base station subsystem (e.g., an indoor small base station or a remote Radio Head (RRH)). The term "cell" or "sector" refers to a part or all of the coverage area of at least one of the base station and base station subsystem that provides communication services at the coverage.

In the present disclosure, terms such as "mobile station (MS)", "user terminal", "user equipment (UE)", "terminal", and the like, may be used interchangeably.

There is a case in which the mobile station may be referred to, by a person skilled in the art, as a subscriber station, a mobile unit, a subscriber unit, a wireless unit, a remote unit, a mobile device, a wireless device, a wireless communication device, a remote device, a mobile subscriber station, an access terminal, a mobile terminal, a wireless terminal, a remote terminal, a handset, a user agent, a mobile client, a client, or some other appropriate terms.

At least one of the base station and the mobile station may be referred to as a transmission apparatus, reception apparatus, communication apparatus, or the like. The at least one of the base station and the mobile station may be a device mounted on the mobile station, the mobile station itself, or the like. The mobile station may be a vehicle (e.g., a car, an airplane, etc.), an unmanned mobile body (e.g., a drone, an automated vehicle, etc.), or a robot (manned or unmanned). At least one of the base station and the mobile station may include an apparatus that does not necessarily move during communication operations. For example, at least one of the base station and the mobile station may be an IoT (Internet of Things) device such as a sensor.

Further, the base station in the present disclosure may be read as the user terminal. For example, each aspect/embodiment of the present disclosure may be applied to a configuration in which communications between the base station and the user terminal are replaced by communications between multiple terminals 20 (e.g., may be referred to as D2D (Device-to-Device), V2X (Vehicle-to-Everything), etc.). In this case, the function of the base station 10 described above may be provided by the terminal 20. Further, the phrases "up" and "down" may also be replaced by the phrases corresponding to terminal-to-terminal communication (e.g., "side"). For example, an uplink channel, a downlink channel, or the like, may be read as a sidelink channel.

Further, the user terminal in the present disclosure may be read as the base station. In this case, the function of the user terminal described above may be provided by the base station.

The term "determining" used in the present specification may include various actions or operations. The "determining" may include, for example, a case in which "judging", "calculating", "computing", "processing", "deriving", "investigating", "looking up, search, inquiry" (e.g., looking up a table, database, or other data structures), or "ascertaining" is deemed as "determining". Further, the "determining" may include a case in which "receiving" (e.g., receiving information), "transmitting" (e.g., transmitting information), "inputting", "outputting", or "accessing" (e.g., accessing data in a memory) is deemed as "determining". Further, the "determining" may include a case in which "resolving", "selecting", "choosing", "establishing", "comparing", or the like is deemed as "determining". In other words, the "determining" may include a case in which a certain action or operation is deemed as "determining". Further, "decision" may be read as "assuming", "expecting", or "considering", etc.

The term "connected" or "coupled" or any variation thereof means any direct or indirect connection or connection between two or more elements and may include the presence of one or more intermediate elements between the two elements "connected" or "coupled" with each other. The coupling or connection between the elements may be physical, logical, or a combination thereof. For example, "connection" may be read as "access". As used in the present disclosure, the two elements may be thought of as being "connected" or "coupled" to each other using at least one of the one or more wires, cables, and printed electrical connections and, as a number of nonlimiting and non-inclusive examples, electromagnetic energy having wavelengths in the radio frequency region, the microwave region, and the light (both visible and invisible) region.

The reference signal may be abbreviated as RS or may be referred to as a pilot, depending on the applied standards.

The description "based on" used in the present specification does not mean "based on only" unless otherwise specifically noted. In other words, the phrase "based on" means both "based on only" and "based on at least".

Any reference to an element using terms such as "first" or "second" as used in the present disclosure does not generally limit the amount or the order of those elements. These terms may be used in the present disclosure as a convenient way to distinguish between two or more elements. Therefore, references to the first and second elements do not imply that only two elements may be employed or that the first element must in some way precede the second element.

"Means" included in the configuration of each of the above apparatuses may be replaced by "parts", "circuits", "devices", etc.

In the case where the terms "include", "including" and variations thereof are used in the present disclosure, these terms are intended to be comprehensive in the same way as the term "comprising". Further, the term "or" used in the present specification is not intended to be an "exclusive or".

A radio frame may include one or more frames in the time domain. Each of the one or more frames in the time domain may be referred to as a subframe. The subframe may further include one or more slots in the time domain. The subframe may be a fixed length of time (e.g., 1 ms) independent from the numerology.

The numerology may be a communication parameter that is applied to at least one of the transmission and reception of a signal or channel. The numerology may indicate at least one of, for example, SubCarrier Spacing (SCS), bandwidth, symbol length, cyclic prefix length, transmission time interval (TTI), number of symbols per TTI, radio frame configuration, specific filtering processing performed by the transceiver in the frequency domain, and specific windowing processing performed by the transceiver in the time domain.

The slot may include one or more symbols in the time domain (OFDM (Orthogonal Frequency Division Multiplexing) symbols, SC-FDMA (Single Carrier Frequency Division Multiple Access) symbols, and the like). The slot may be a time unit based on the numerology.

The slot may include a plurality of mini slots. Each mini slot may include one or more symbols in the time domain. Further, the mini slot may be referred to as a sub-slot. The mini slot may include fewer symbols than the slot. PDSCH (or PUSCH) transmitted in time units greater than a mini slot may be referred to as PDSCH (or PUSCH) mapping type A. PDSCH (or PUSCH) transmitted using a mini slot may be referred to as PDSCH (or PUSCH) mapping type B.

A radio frame, a subframe, a slot, a mini slot and a symbol all represent time units for transmitting signals. Different terms may be used for referring to a radio frame, a subframe, a slot, a mini slot and a symbol, respectively.

For example, one subframe may be referred to as a transmission time interval (TTI), multiple consecutive subframes may be referred to as a TTI, and one slot or one mini slot may be referred to as a TTI. In other words, at least one of the subframe and the TTI may be a subframe (1 ms) in an existing LTE, a period shorter than 1 ms (e.g., 1-13 symbols), or a period longer than 1 ms. It should be noted that the unit representing the TTI may be referred to as a slot, a mini slot, or the like, rather than a subframe.

The TTI refers to, for example, the minimum time unit for scheduling in wireless communications. For example, in an LTE system, a base station schedules each terminal 20 to allocate radio resources (such as frequency bandwidth, transmission power, etc. that can be used in each terminal 20) in TTI units. The definition of TTI is not limited to the above.

The TTI may be a transmission time unit, such as a channel-encoded data packet (transport block), code block, codeword, or the like, or may be a processing unit, such as scheduling or link adaptation. It should be noted that, when a TTI is provided, the time interval (e.g., the number of symbols) during which the transport block, code block, codeword, or the like, is actually mapped may be shorter than the TTI.

It should be noted that, when one slot or one mini slot is referred to as a TTI, one or more TTIs (i.e., one or more slots or one or more mini slots) may be the minimum time unit for scheduling. Further, the number of slots (the number of mini slots) constituting the minimum time unit of the scheduling may be controlled.

A TTI having a time length of 1 ms may be referred to as a normal TTI (a TTI in LTE Rel. 8-12), a long TTI, a normal subframe, a long subframe, a slot, and the like. A TTI that is shorter than the normal TTI may be referred to as a shortened TTI, a short TTI, a partial TTI (or fractional TTI), a shortened subframe, a short subframe, a mini slot, a subslot, a slot, or the like.

It should be noted that the long TTI (e.g., normal TTI, subframe, etc.,) may be replaced with a TTI having a time length exceeding 1 ms, and the short TTI (e.g., shortened TTI, etc.,) may be replaced with a TTI having a TTI length less than the TTI length of the long TTI and a TTI length greater than 1 ms.

A resource block (RB) is a time domain and frequency domain resource allocation unit and may include one or more consecutive subcarriers in the frequency domain. The number of subcarriers included in an RB may be the same, regardless of the numerology, and may be 12, for example. The number of subcarriers included in an RB may be determined on the basis of numerology.

Further, the time domain of an RB may include one or more symbols, which may be 1 slot, 1 mini slot, 1 subframe, or 1 TTI in length. One TTI, one subframe, etc., may each include one or more resource blocks.

It should be noted that one or more RBs may be referred to as physical resource blocks (PRBs, Physical RBs), sub-carrier groups (SCGs), resource element groups (REGs), PRB pairs, RB pairs, and the like.

Further, a resource block may include one or more resource elements (RE). For example, 1 RE may be a radio resource area of one sub-carrier and one symbol.

The bandwidth part (BWP) (which may also be referred to as a partial bandwidth, etc.) may represent a subset of consecutive common RBs (common resource blocks) for a given numerology in a carrier. Here, a common RB may be identified by an index of RB relative to the common reference point of the carrier. A PRB may be defined in a BWP and may be numbered within the BWP.

BWP may include BWP for UL (UL BWP) and BWP for DL (DL BWP). For a terminal 20, one or more BWPs may be configured in one carrier.

At least one of the configured BWPs may be activated, and the terminal 20 may assume that the terminal 20 will not transmit and receive signals/channels outside the activated BWP. It should be noted that the terms "cell" and "carrier" in this disclosure may be replaced by "BWP."

Structures of a radio frame, a subframe, a slot, a mini slot, and a symbol described above are exemplary only. For example, the number of subframes included in a radio frame, the number of slots per subframe or radio frame, the number of mini slots included in a slot, the number of symbols and RBs included in a slot or mini slot, the number of subcarriers included in a RB, the number of symbols in a TTI, the symbol length, the cyclic prefix (CP) length, and the like, may be changed in various ways.

In the present disclosure, where an article is added by translation, for example "a", "an", and "the", the disclosure may include that the noun following these articles is plural.

In this disclosure, the term "A and B are different" may mean "A and B are different from each other." It should be noted that the term "A and B are different" may mean "A and B are different from C." Terms such as "separated" or "combined" may be interpreted in the same way as the above-described "different".

Each aspect/embodiment described in the present specification may be used independently, may be used in combination, or may be used by switching according to operations. Further, notification (transmission/reporting) of predetermined information (e.g., notification (transmission/reporting) of "X") is not limited to an explicit notification (transmission/reporting), and may be performed by an implicit notification (transmission/reporting) (e.g., by not performing notification (transmission/reporting) of the predetermined information).

As described above, the present invention has been described in detail. It is apparent to a person skilled in the art that the present invention is not limited to one or more embodiments of the present invention described in the present specification. Modifications, alternatives, replacements, etc., of the present invention may be possible without departing from the subject matter and the scope of the present invention defined by the descriptions of claims. Therefore, the descriptions of the present specification are for illustrative purposes only, and are not intended to be limitations to the present invention.

[DESCRIPTION OF THE REFERENCE NUMERALS]

10 Base station
110 Transmission unit
120 Reception unit
130 Configuration unit
140 Control unit
20 Terminal
210 Transmission unit
220 Reception unit
230 Configuration unit
240 Control unit
1001 Processor
1002 Storage device
1003 Auxiliary storage device
1004 Communication device
1005 Input device
1006 Output device

**Claims**

1. A terminal comprising:

   a control unit configured to determine whether COT (Channel occupancy time) sharing information is to be included in CG-UCI (Configured grant - Uplink control information) independently from information other than the COT sharing information; and
   a transmission unit configured to transmit the CG-UCI to a base station via a shared channel according to CG.

2. The terminal as claimed in claim 1, wherein
   the information other than the COT sharing information is at least one of HPN (Hybrid automatic repeat request process number), RV (Redundancy version) and NDI (New data indicator).

3. The terminal as claimed in claim 2, wherein
   a parameter for determining whether to include the COT sharing information in the CG-UCI is different from a parameter for determining whether to include the information other than the COT sharing information in the CG-UCI.

4. The terminal as claimed in claim 2, wherein
   the control unit always includes the COT sharing information in the CG-UCI regardless of transmission configuration of the information other than the COT sharing information.

5. The terminal as claimed in claim 2, wherein
   in a case where the COT sharing information alone or the information other than the COT sharing information alone is to be transmitted, the control unit includes the COT sharing information alone or the information other than the COT sharing information alone in the CG-UCI.

6. A communication method performed by a terminal, the communication method comprising:

   determining whether COT (Channel occupancy time) sharing information is to be included in CG-UCI (Configured grant - Uplink control information) independently from information other than the COT sharing information; and
   transmitting the CG-UCI to a base station via a shared channel according to CG.

# FIG.1

# FIG.2

EP 4 340 425 A1

# FIG.3

```
        ┌─────────────┐
        │    START    │
        └──────┬──────┘
               │
               ▼                                    ⌇S11
┌──────────────────────────────────────────────────┐
│                                                    │
│              OBTAIN COT BY LBT                     │
│                                                    │
└──────────────────────┬─────────────────────────────┘
                       │
                       ▼                            ⌇S12
┌──────────────────────────────────────────────────┐
│                                                    │
│   TRANSMIT EACH OF COT SHARING INFORMATION AND     │
│      REMAINING INFORMATION USING DIFFERENT         │
│            UPPER LAYER PARAMETER                    │
│                                                    │
└──────────────────────┬─────────────────────────────┘
                       │
                       ▼
               ┌─────────────┐
               │     END     │
               └─────────────┘
```

# FIG.4

```
        ┌─────────────┐
        │    START    │
        └─────────────┘
               │
               ▼                                    S21
┌──────────────────────────────────────────────────┐
│                                                    │
│              OBTAIN COT BY LBT                     │
│                                                    │
└──────────────────────────────────────────────────┘
               │
               ▼                                    S22
┌──────────────────────────────────────────────────┐
│                                                    │
│   REGARDLESS OF TRANSMISSION CONFIGURATION OF      │
│      INFORMATION OTHER THAN COT SHARING            │
│   INFORMATION, ALWAYS TRANSMIT, OR ALWAYS DOES     │
│     NOT TRANSMIT, COT SHARING INFORMATION          │
│                                                    │
└──────────────────────────────────────────────────┘
               │
               ▼
        ┌─────────────┐
        │     END     │
        └─────────────┘
```

# FIG.5

```
                    ┌─────────────┐
                    │    START    │
                    └─────────────┘
                           │
                           ▼                        ⟋S31
   ┌──────────────────────────────────────────────────────┐
   │                                                        │
   │               OBTAIN COT BY LBT                        │
   │                                                        │
   └──────────────────────────────────────────────────────┘
                           │
                           ▼                        ⟋S32
   ┌──────────────────────────────────────────────────────┐
   │                                                        │
   │    REGARDLESS OF TRANSMISSION CONFIGURATION OF         │
   │      INFORMATION OTHER THAN COT SHARING                │
   │       INFORMATION, TRANSMIT COT SHARING                │
   │    INFORMATION IN A CASE WHERE A SPECIFIC              │
   │            CONDITION IS SATISFIED                      │
   │                                                        │
   └──────────────────────────────────────────────────────┘
                           │
                           ▼
                    ┌─────────────┐
                    │     END     │
                    └─────────────┘
```

FIG.6

EP 4 340 425 A1

```
                    ( START )
                        |
                        v                    S41
        +-------------------------------------+
        |         OBTAIN COT BY LBT           |
        +-------------------------------------+
                        |
                        v                    S42
        +-------------------------------------+
        |     EXECUTE STEP S12, S22 OR S32    |
        +-------------------------------------+
                        |
                        v                    S43
                     /  COT SHARING  \
                    /  INFORMATION ALONE OR \        NO
                   <  REMAINING INFORMATION  >----------------+
                    \   ALONE IS TO BE      /                 |
                     \   TRANSMITTED?      /                  |
                        | YES                                 |
                        v          S44                        v          S45
        +-------------------------------+      +-------------------------------+
        | THAT INFORMATION IS TREATED   |      | TRANSMISSION IS PERFORMED     |
        | IN THE SAME WAY AS EXISTING   |      | AS EXISTING CG-UCI            |
        | CG-UCI                        |      |                               |
        +-------------------------------+      +-------------------------------+
                        |                                     |
                        v <-----------------------------------+
                     ( END )
```

FIG.7

FIG.7 flowchart:

START
↓
S51: OBTAIN COT BY LBT
↓
S52: EXECUTE STEP S12, S22 OR S32
↓
S53: COT SHARING INFORMATION ALONE OR REMAINING INFORMATION ALONE IS TO BE TRANSMITTED?
 — NO → S55: TRANSMISSION IS PERFORMED AS EXISTING CG-UCI
 — YES → S54: THAT INFORMATION IS TREATED AS UCI DIFFERENT FROM EXISTING CG-UCI
↓
END

# FIG.8

```
                                                              ⌐10

┌──────────────────────────────────────────────────────────────┐
│  ┌ ─ ─ ─ ─ ─ ─ ─ ─ ─ ─ ─ ─ ─ ─ ─ ─ ┐                          │
│  │ COMMUNICATION UNIT              │                          │
│  │              ⌐110               │              ⌐130        │
│  │  ┌──────────────────────┐       │   ┌──────────────────────┐│
│  │  │                      │       │   │ CONFIGURATION        ││
│  │  │ TRANSMISSION UNIT    ├───┐ ┌─┼───┤ UNIT                 ││
│  │  │                      │   │ │ │   │                      ││
│  │  └──────────────────────┘   │ │ │   └──────────────────────┘│
│  │              ⌐120           │ │ │              ⌐140        │
│  │  ┌──────────────────────┐   │ │ │   ┌──────────────────────┐│
│  │  │                      │   │ │ │   │                      ││
│  │  │ RECEPTION UNIT       ├───┘ └─┼───┤ CONTROL UNIT         ││
│  │  │                      │       │   │                      ││
│  │  └──────────────────────┘       │   └──────────────────────┘│
│  └ ─ ─ ─ ─ ─ ─ ─ ─ ─ ─ ─ ─ ─ ─ ─ ─ ┘                          │
└──────────────────────────────────────────────────────────────┘
```

# FIG.9

```
                                                              ⌐20

┌──────────────────────────────────────────────────────────────┐
│  ┌ ─ ─ ─ ─ ─ ─ ─ ─ ─ ─ ─ ─ ─ ─ ─ ─ ┐                          │
│  │ COMMUNICATION UNIT              │                          │
│  │              ⌐210               │              ⌐230        │
│  │  ┌──────────────────────┐       │   ┌──────────────────────┐│
│  │  │                      │       │   │ CONFIGURATION        ││
│  │  │ TRANSMISSION UNIT    ├───┐ ┌─┼───┤ UNIT                 ││
│  │  │                      │   │ │ │   │                      ││
│  │  └──────────────────────┘   │ │ │   └──────────────────────┘│
│  │              ⌐220           │ │ │              ⌐240        │
│  │  ┌──────────────────────┐   │ │ │   ┌──────────────────────┐│
│  │  │                      │   │ │ │   │                      ││
│  │  │ RECEPTION UNIT       ├───┘ └─┼───┤ CONTROL UNIT         ││
│  │  │                      │       │   │                      ││
│  │  └──────────────────────┘       │   └──────────────────────┘│
│  └ ─ ─ ─ ─ ─ ─ ─ ─ ─ ─ ─ ─ ─ ─ ─ ─ ┘                          │
└──────────────────────────────────────────────────────────────┘
```

# FIG.10

10, 20

1001
PROCESSOR

1007

1004
COMMUNICATION DEVICE

1002
STORAGE DEVICE

1005
INPUT DEVICE

1003
AUXILIARY STORAGE DEVICE

1006
OUTPUT DEVICE

## INTERNATIONAL SEARCH REPORT

| International application No. |
| --- |
| **PCT/JP2021/017775** |

**A. CLASSIFICATION OF SUBJECT MATTER**

*H04W 16/14*(2009.01)i; *H04W 72/12*(2009.01)i; *H04W 72/14*(2009.01)i
FI: H04W72/12 150; H04W16/14; H04W72/14

According to International Patent Classification (IPC) or to both national classification and IPC

**B. FIELDS SEARCHED**

Minimum documentation searched (classification system followed by classification symbols)

H04W16/14; H04W72/12; H04W72/14

Documentation searched other than minimum documentation to the extent that such documents are included in the fields searched

Published examined utility model applications of Japan 1922-1996
Published unexamined utility model applications of Japan 1971-2021
Registered utility model specifications of Japan 1996-2021
Published registered utility model applications of Japan 1994-2021

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | PANASONIC. Enhancements for unlicensed band URLLC/IIoT[online]. 3GPP TSG RAN WG1 #104b-e R1-2103206. 20 April 2021<br>pp. 1-9, chapter 3 | 1-2, 4, 6 |
| Y | | 3, 5 |
| Y | LENOVO. MOTOROLA MOBILITY. COT sharing information in CG-UCI[online]. 3GPP TSG RAN WG1 #100b_e R1-2002684. 30 April 2020<br>pp. 1-3, chapter 1, table 6.3.2.1.3-1 | 3, 5 |
| A | NTT DOCOMO, INC. Discussion on enhancements for unlicensed band URLLC[online]. 3GPP TSG RAN WG1 #104b-e R1-2103576. 20 April 2021<br>pp. 1-10 | 1-6 |

☐ Further documents are listed in the continuation of Box C.    ☐ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **19 November 2021** | **30 November 2021** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**REFERENCES CITED IN THE DESCRIPTION**

**Non-patent literature cited in the description**

- *3GPP TS 38.300 V16.5.0,* March 2021